# EUROPEAN PATENT APPLICATION

(11) **EP 2 612 809 A2**
(43) Date of publication of application: **10.07.2013**
(21) Application number: 11822050.8
(22) Date of filing: 01.08.2011
(51) Int. Cl.: B62M 1/04, B62K 17/00, B62M 9/12, B62M 3/08

(54) **KICKBOARD-TYPE BICYCLE**

(30) Priority: 01.09.2010 KR 20100009199 U
(71) Applicant: Happylife Co., Ltd., Daejeon 306-819 (KR)
(72) Inventor: Kim, Ji Hoon, DAEJEON 302 803 (KR)
(74) Representative: Garavelli, Paolo
(86) International application number: PCT/KR2011/005667
(87) International publication number: WO 2012/030075

(57) **Abstract**

The present disclosure relates to a bicycle, and more particularly, to a kickboard-type bicycle capable of being used as a kickboard or a bicycle according to the user's choice, can be shifted between different speeds for easy speed control, requires the use of both legs (unlike conventional kickboards) so as to promote the balanced growth of youngsters who are in their growing years, and has pedals that can be adjusted to positions suitable for the user. To this end, the kickboard-type bicycle according to the present invention, with respect to a bicycle having a front wheel stered by a handle and a rear wheel driven by pedals, has a handle connected and fixed to the front of the body through a connecting frame, has one end of a link coupled via a hinge to one end of a pedal and the other end of the link coupled via a shaft with a crankshaft, has a drive sprocket installed on one end of the crankshaft, has a rotation shaft formed on the rear bottom side of the body with the rear wheel installed at the end thereof, has a multistage sprocket for shifting speed installed on an end of the rotation shaft, and has the drive sprocket installed on the crankshaft connected via a chain to the multistage sprocket installed on the rotation shaft.

## Description

### [Technical Field]

The present invention relates to a bicycle, and more particularly, to a quick board type bicycle which is used as a quick board or a bicycle at a user's option, is easy to adjust speed with change of speed, encourages balanced physical development of children as such children use both feet to ride the bicycle unlike existing quick boards, and adjusts a position of a pedal according to a user's body.

### [Background Art]

Generally, a quick board advances as a user steps into a board with wheels formed back and forth and hits the ground with either foot.

Such quick board is portable and easy to be kept and is usable by everyone and thus is widely used.

However, the quick board makes a user use only one foot and causes unbalanced growth of toddlers and children whose skeletal structure is not perfect yet, and requires great physical strength when riding for a long time, and in particular, requires more power on an uphill road. Thus, there is a problem for a user to enjoy the quick board for a long time.

### [Disclosure]

### [Technical Problem]

The present invention has been made to solve the problems and it is an object of the present invention to provide a quick board type bicycle which is used as a quick board or a bicycle at a user's option, is easy to adjust speed with change of speed, encourages balanced physical development of children as such children use both feet to ride the bicycle unlike existing quick boards, and adjusts a position of a pedal according to a user's body.

### [Technical Solution]

In order to achieve the object of the present invention, a bicycle which directs a front wheel by a handle and drives a rear wheel by a pedal, wherein

a connection frame is used to connect and fix a handle to a front side of a body,

one end of the pedal is hingedly coupled to the connection frame in which a plurality of through holes is formed at a consistent interval in a lengthwise direction to adjust a hingedly-coupled position of the pedal according to a user's body,

one end of a link is hingedly coupled to one end of the pedal, a second end of the link is axially coupled to a crank shaft, and a driving gear is installed in one end of the crank shaft,

a connection gear is formed to be engaged with the driving gear, and the connection gear is axially coupled to a driving sprocket,

a rotational shaft is formed in a rear bottom of the body and is installed with a rear wheel in one end, and a multi-step sprocket for change of speed is installed in one end of the rotational shaft, and

the multi-step sprocket installed in the rotational shaft is connected to the driving sprocket by a chain.

A derailer is formed between the driving sprocket and the multi-step sprocket to adjust a position of the chain connected to the multi-step sprocket.

A one-way clutch bearing is further installed either between the crank shaft and the driving sprocket or between the rotational shaft and the multi-step sprocket.

The pedal is formed on the top of the body and keeps balance with the body, and a guide portion is formed between the pedal and the body for the pedal to keep balance with the body in a vertical direction and rise and fall.

The guide portion comprises a shock absorber or a spring.

A seat is formed in a rear upper surface of the body.

Other purposes and effects of the present invention will become apparent from the following detailed description, and detailed description representing preferable exemplary embodiments of the present invention and exemplary embodiments will not limit the scope of the present invention.

### [Advantageous Effect]

A quick board type bicycle according to the present invention is used as a quick board or a bicycle at a user's option, is easy to adjust speed with change of speed, encourages balanced physical development of children as such children use both feet to ride the bicycle unlike existing quick boards, and adjusts a position of a pedal according to a user's body.

### [Brief Description of Drawings]

FIG. 1 is a lateral sectional view of a quick board type bicycle according to the present invention.

FIG. 2 illustrates an operation of a driving sprocket by a pedal of the quick board type bicycle according to the present invention.

FIG. 3 illustrates a transmission of power generated by the pedal to a rear wheel of the quick board type bicycle according to the present invention.

FIG. 4 is a lateral sectional view of a quick board type bicycle that shows another exemplary embodiment according to the present invention.

FIG. 5 is a lateral sectional view of a quick board type bicycle according to another exemplary embodiment of the present invention.

FIG. 6 is a partial lateral sectional view of a quick board type bicycle according to another exemplary embodiment of the present invention.

### [Best Mode]

Hereinafter, an exemplary embodiment of the present invention will be described in detail with reference to accompanying drawings. Firstly, like numerals will be given to functionally like or similar elements throughout the drawings.

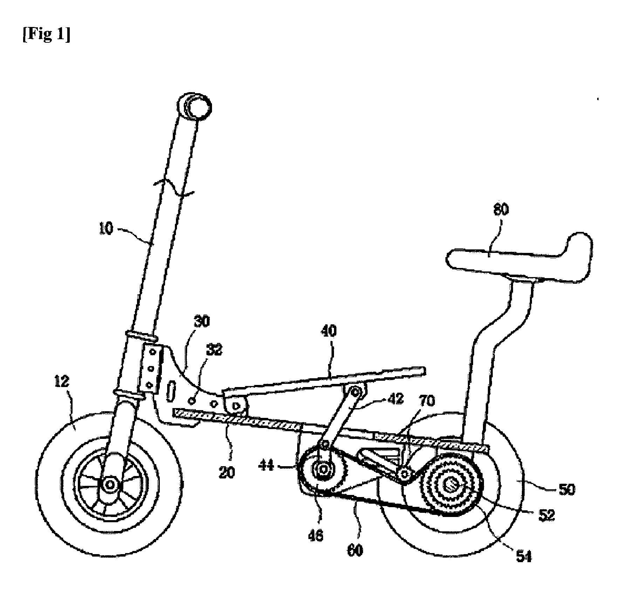

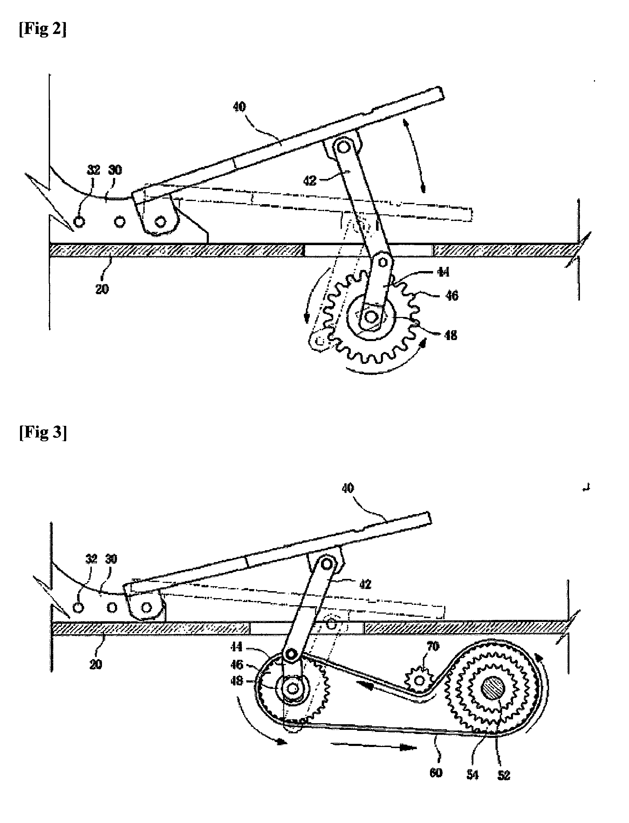

FIG. 1 is a lateral sectional view of a quick board type bicycle according to the present invention. FIG. 2 illustrates an operation of a driving sprocket by a pedal of the quick board type bicycle according to the present invention. FIG. 3 illustrates a transmission of power generated by the pedal to a rear wheel of the quick board type bicycle according to the present invention.

In the present invention, a front side means the direction in which a bicycle advances.

Referring to FIGS. 1 to 3, a quick board type bicycle according to the present invention includes a handle 10 which directs a front wheel 12, and a pedal 40 which generates power of a rear wheel 50.

A connection frame is formed in one end of the handle 10 to be connected and fixed to a front part of a bicycle body 20.

One end of the pedal 40 is hingedly coupled to the connection frame 30 and a second end of the pedal 40 moves up and down centering on the hingedly-coupled end of the pedal 40.

A plurality of through holes 32 is formed in the connection frame 30 at a consistent interval in a lengthwise direction to adjust a hingedly-coupled position of the pedal 40 according to a user's body and couples the pedal 40 in various positions.

Returning to FIG. 2, a crank shaft 44 is formed in a bottom of the body 20 to convert a vertical movement of the pedal 40 into a rotation and to transmit the rotation to the rear wheel, and a link 42 is hingedly coupled to one end of the bottom of the pedal 40 and axially coupled to one end of the crank shaft 44 and connects the one end of the bottom of the pedal 40 and the one end of the crank shaft 44.

A driving sprocket 46 is installed in one end of the crank shaft 44.

A rotational shaft 52 is formed in a rear bottom of the body 20 and is installed with the rear wheel 50 at one end.

A typical multi-step sprocket 54 for changing speed is further installed in one end of the rotational shaft 52, and is connected to a driving sprocket 46 by a chain 60, and a counterclockwise rotation of the driving sprocket 46 is transmitted to the multi-step sprocket 54 through the chain 60 and rotates and advances the rear wheel 50.

A one-way clutch bearing 48 is further installed either between the crank shaft 44 and the driving sprocket 46 or between the rotational shaft 52 and the multi-step sprocket 54.

The one-way clutch bearing 48 include a known, typical one-way clutch bearing. For example, as shown in FIGS. 2 and 3, the driving sprocket 46 rotates by the rotational force by which the crank shaft 44 rotates counterclockwise. If the crank shaft 44 rotates clockwise, the rotational force is not transmitted to the driving sprocket 46 by the one-way clutch bearing 48 to prevent reverse rotation.

A derailer 70 is further installed between the driving sprocket 46 and the multi-step sprocket 54 to adjust a position in which the chain 60 is connected to the multi-step sprocket 54 and to adjust the rotational force of the rear wheel 50.

The derailer 70 includes a typical transmission which is installed in a bicycle handle and is manipulated by a lever.

A seat 80 is further formed in a rear upper surface of the body 20 of the quick board type bicycle according to the present invention so that a user may sit down on the seat 80 like a bicycle and press down the pedal 40 to advance, or press down the pedal 40 standing like a typical quick board to thereby advance.

The seat 80 according to the present invention may include various types of seats on which a user may sit down as well as a typical bicycle seat.

Other exemplary embodiments of the quick board type bicycle according to the present invention will be described in detail with reference to accompanying drawings.

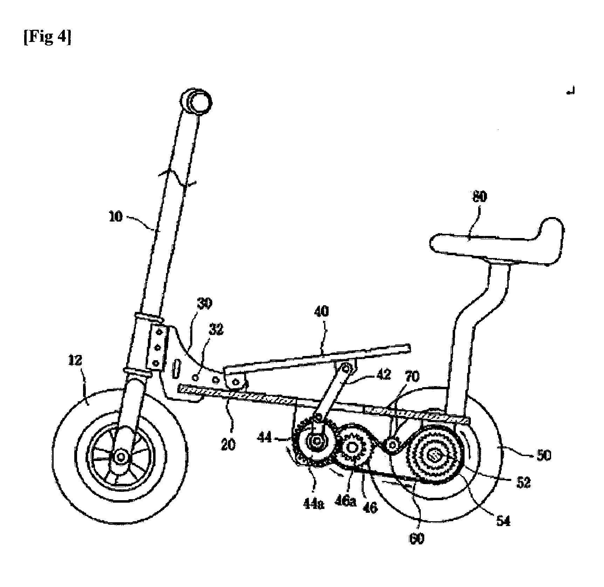

FIG. 4 is a lateral sectional view of a quick board type bicycle according to another exemplary embodiment of the present invention.

As shown therein, a driving gear 44a is installed in one end of the crank shaft 44 which rotates by the pedal 40.

A connection gear 46a is engaged with the driving gear 44a and rotates, and the driving sprocket 46 is coaxially coupled to the connection gear 46a.

The driving gear 44a has a larger diameter than the connection gear 46a and may rotate the driving sprocket 46 faster than the rotational speed of the crank shaft 44 rotating by the pedal 40.

A transmission gear (not shown) is further installed between the driving gear 44a and the connection gear 46a and may change speed of the driving sprocket 46 as well as changing speed of the multi-step sprocket 54 by the derailer 70.

Like in the foregoing exemplary embodiment, the driving sprocket 46 is connected to the multi-step sprocket 54 by the chain 60 and rotates the multi-step sprocket 54 axially coupled to the rear wheel 50, by the rotational force of the driving sprocket 46.

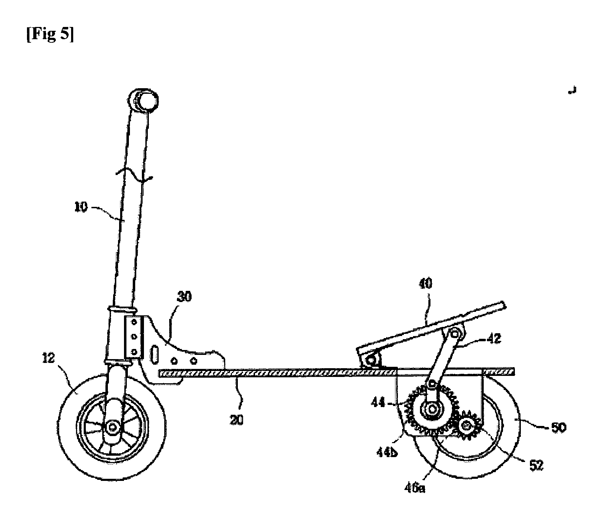

According to a quick board bicycle according to another exemplary embodiment of the present invention, referring to FIG. 5, The driving gear 44b is installed in one end of the crank shaft 44 rotating by the pedal 40 hingedly coupled to the top of the body 20, and the connection gear 46b which is engaged with the driving gear 44b and rotates may be axially coupled to the rear wheel 50 by a rotational shaft 52.

Like in the foregoing exemplary embodiment, the driving gear 44b has a larger diameter than the connection gear 46b and rotates the rear wheel 50 faster than the rotational speed of the crank shaft 44.

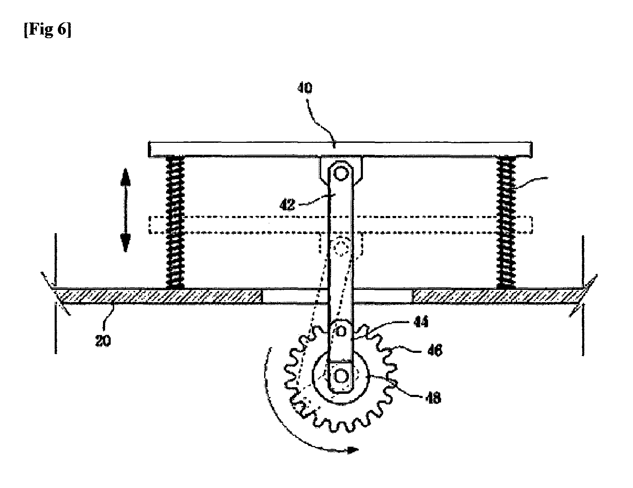

Referring to FIG. 6, in a quick board type bicycle according to another exemplary embodiment of the present invention, the pedal 40 is formed in the top of the body 20 and keeps balance with the body 20, and a guide portion 90 is formed between the pedal 40 and the body 20 for the pedal 40 to keep balance with the body 20 vertically and rise and fall.

The guide portion 90 falls vertically when a user presses the pedal 40, and rises to an original position when a user releases the pressure.

To do the foregoing, the guide portion 90 has an elastic force in a vertical direction, and may preferably include a typical shock absorber or spring. If the guide portion 90 includes a spring, a separation prevention bar may be further formed in the spring and opposite ends thereof may be fixed to the body 20 and the pedal 40 to prevent the spring from being separated, and may be folded like a telescopic antenna and adjusted in length.

In the quick board type bicycle according to the present invention, a toddler seat or a seat for the physically challenged may be further installed in the top of the body 20 and thus the quick board type bicycle may be used as a baby carriage or a power seat. If a bucket is installed in the quick board type bicycle to transport luggage, the quick board type bicycle may be used as a carriage. If an external appearance of an automotive shape is installed in the quick board type bicycle, the quick board type bicycle may be used as a cart or a toy car for children.

That is, as explained clearly as above, the quick board type bicycle according to the present invention may be used as a quick board or a bicycle at a user's option, is easy to adjust speed with change of speed, encourages balanced physical development of children as such children use both feet to ride the bicycle unlike existing quick boards.

The present invention may have other various embodiments without deviation from its spirit or material features. By such reason, the foregoing exemplary embodiments are simple examples and shall not be interpreted in a limited way. The scope of the present invention is represented by the claims and is not bound by the text of the specification. Again, alternations and amendments which belong to the equivalent scope of the claims are within the scope of the present invention.

[Description of Reference Numerals]

10: handle 12: front wheel

20: body 30: connection frame

32: through holes 40: pedal

42: link 44: crank shaft

44a and 44b: driving gears 46: driving sprocket

46a and 46b: connection gear 48: one-way clutch bearing

50: rear wheel 52: rotational shaft

54: multi-step sprocket 60: chain

70: derailer 80: seat

90: guide portion

## Claims

1. A bicycle which directs a front wheel by a handle and drives a rear wheel by a pedal, wherein a connection frame is used to connect and fix a handle to a front side of a body, one end of the pedal is hingedly coupled to the connection frame in which a plurality of through holes is formed at a consistent interval in a lengthwise direction to adjust a hingedly-coupled position of the pedal according to a user's body, one end of a link is hingedly coupled to one end of the pedal, a second end of the link is axially coupled to a crank shaft, a driving gear is installed in one end of the crank shaft, a connection gear is formed to be engaged with the driving gear, the connection gear is axially coupled to a driving sprocket, a rotational shaft is formed in a rear bottom of the body and is installed with a rear wheel in one end, a multi-step sprocket for change of speed is installed in one end of the rotational shaft, and the multi-step sprocket installed in the rotational shaft is connected to the driving sprocket by a chain.

2. The quick board type bicycle according to claim 1, wherein a derailer is formed between the driving sprocket and the multi-step sprocket to adjust a position of the chain connected to the multi-step sprocket.

3. The quick board type bicycle according to claim 1, wherein a one-way clutch bearing is further installed either between the crank shaft and the driving sprocket or between the rotational shaft and the multi-step sprocket.

4. The quick board type bicycle according to claim 1, wherein the pedal is formed on the top of the body and keeps balance with the body, and a guide portion is formed between the pedal and the body for the pedal to keep balance with the body in a vertical direction and rise and fall.

5. The quick board type bicycle according to claim 4, wherein the guide portion comprises a shock absorber or a spring.

6. The quick board type bicycle according to claim 1, wherein a seat is formed in a rear upper surface of the body.
